# EUROPEAN PATENT SPECIFICATION

(11) **EP 4 366 137 B1**
(45) Date of publication and mention of the grant of the patent: **12.08.2026**
(21) Application number: 23150587.6
(22) Date of filing: 06.01.2023
(51) Int. Cl.: H02K 1/276, H02K 29/06

(54) **BRUSHLESS ELECTRICAL MACHINE WITH PERMANENT MAGNETS EXCITATION**
BÜRSTENLOSE ELEKTRISCHE MASCHINE MIT PERMANENTMAGNETERREGUNG
MACHINE ÉLECTRIQUE SANS BALAIS AVEC EXCITATION À AIMANT PERMANENT

(30) Priority: 02.11.2022 BG 11361222
(43) Date of publication of application: 08.05.2024
(73) Proprietor: Almott Group AD, 6006 Stara Zagora (BG)
(72) Inventor: POPOV, Encho, 1421 Sofia (BG)
(74) Representative: Pintz, György

(56) References cited:
- CN-A- 107 394 927
- DE-A1- 10 144 585
- JP-A- 2014 171 372

## Description

### FIELD OF THE INVENTION

The brushless electrical motor with permanent magnet excitation is designed for driving electrical vehicles, for driving machine tools with CNC and others, and as an alternator for charging batteries.

### DESCRIPTION OF PRIOR ART

A brushless electric motor excited by permanent magnets [1] is known, which contains a shaft which is supported in front and rear shields by means of front and rear bearings. A hull is covered by the shields. A stationary stator pack composed of sheet electrical steel is enclosed by the housing. A plurality of channels with a rectangular cross-section is evenly spaced along the inner surface of the stator pack. An insulated coil is laid in the channels. A rotor is movably covered by the stator. The rotor contains a rotor pack attached to the shaft. Magnetic poles are formed in the rotor pack. In each pole, a pair of axially directed and mirror-positioned axial channels with respect to the pole is formed with an angle between them opened to the outer surface of the rotor. Each axial channel is composed of two parts - an inner part with a rectangular cross-section and an outer part with a rectangular cross-section located closer to the outer surface of the rotor. The height of the outer parts is less than the height of the inner parts. The outer parts of the axial channels are connected to the outer cylindrical surface of the rotor by means of radially located and axially extending air gaps. The air gap between the stator and the rotor is constant. The inner ends of each pair of axial channels are separated by strips between them. In the inner and outer parts of the axial channels, permanent magnets corresponding in shape and size to the channels are inserted, the faces of which are in partial contact.

Another brushless electric motor with permanent magnet excitation [2] is known, in which each pole of the rotor contains at least one permanent magnet placed in a trapezoidal radial channel formed in the rotor pack. The permanent magnet is covered by trapezoidal non-magnetic segments.

A brushless electric motor excited by permanent magnets is known [3], in the rotor package of which a pair of outer and inner radially located channels, which are not aligned with each other, are formed. The outer channel is located near the outer surface of the rotor and has a smaller height than the height of the inner channel, the end of which is located near the shaft. In each of these channels are placed corresponding permanent magnets whose faces are in partial contact.

The closest prior art is brushless electrical motor with permanent magnet excitation is known [4] including a shaft which through front and rear bearings is supported in front and rear end bells. Housing is covered by the end bells. In the housing are formed channels for the passage of cooling liquid. From the housing, a stator pack is stationary covered, composed of sheet electrical steel. On the inner surface of the stator pack, multiple pear-shaped slots are uniformly spaced. In the slots, an insulated winding of round wire is laid. From the stator, a rotor is movably covered. The rotor contains a rotor pack, mounted on the shaft. Magnetic poles are formed in the rotor pack. In each pole, one pair of axially directed and mirror situated relative to the pole axial channels are formed with an angle between them, open to the outer surface of the rotor. The axial channels are with a rectangular cross-section and are separated from the outer cylindrical surface of the rotor by means of thin strips of increased thickness. The air gap between the stator and the rotor is a constant value. The inner ends of each pair of axial channels are separated by strips between them. Equal permanent magnets with a rectangular cross-section are inserted into the axial channels. In the rotor package, on the boundary between adjacent poles below the level of the axial channels, are shaped air ducts with a tangential width that is greater than their radial height.

A disadvantage of the known electric motor is the increased mass of the permanent magnets and the increased portion of the magnetic flux created by the permanent magnets, which does not create a torque due to that the sinusoidal shape of the magnetic field in the air gap with a reduced value of the third harmonic component is achieved by increased air gap value and increased thickness of the strips between the outer ends of the axial channels and outer surface of the rotor.

A disadvantage is also the increased value of the electrical resistance of the stator winding due to the reduced filling of the stator slots with round copper wires.

Another disadvantage is the reduced value of the cross-magnetic flux, created by the winding in the stator, creating a reactionary torque at a phase shift of the current commutation in the phases due to the increased value and the uniformity of the air gap throughout the whole circumference of the rotor as well as the greater height of the permanent magnets, thereby reducing the width of the space between the axial channels of the adjacent poles.

A disadvantage is also the increased remoteness of the area of action of the permanent magnets from the zone of maximum energy of the permanent magnets due to the increased height and uniformity of the height of the permanent magnets.

The power of the known brushless electric motor with excitation of permanent magnets is reduced, due to the set of the above disadvantages, accompanied by an increased mass of permanent magnets.

### SUMMARY OF THE INVENTION

The aim of the invention is to create a brushless electrical motor with permanent magnet excitation with increased power at a reduced mass of permanent magnets.

The aim is achieved by a brushless electrical motor with permanent magnet excitation including a shaft which is supported in front and rear end bells through front and rear bearings. Between the front and rear end a bell is connected immovably a stator including housing with formed ducts in it for passage of cooling liquid. By the housing is stationary covered a stator pack composed of a sheet electrical steel. On the inner surface of the stator pack are uniformly spaced slots in which at least one insulated winding is laid. From the stator a rotor is movably covered containing a rotor pack, mounted immovably on the shaft. Magnetic poles are formed in the rotor pack with alternating polarity. In each pole a pair of axial channels is formed with two parallel walls. The pair of axial channels is positioned relative to each other at an angle open to the outer surface of the rotor. The pairs of axial channels are separated from the outer surface of the rotor by means of thin strips and the inner ends of the pairs of axial channels are separated by means of other thin strips. In the axial channels permanent magnets with a rectangular cross-section are inserted. Each axial channel is composed of at least two parts - inner part with rectangular cross section with width b1 and height a1 and outer part with rectangular cross section with width b2 and height a2. The walls of the inner parts and of the outer parts facing the interpole space are a continuation of each other. The outer parts located closer to the outer surface of the rotor, has a smaller height a2 than the height a1 of the internal parts of the axial channels. Corresponding to the dimensions of the parts of the axial channels, the height of the inserted permanent magnets in the outer parts located closer to the surface of the rotor is less than the height of the inserted permanent magnets in the inner parts of the axial channels. Bilaterally on each pole inclined surface is formed where the surface of the poles in the area above the permanent magnets has a reduced radius R1 < 0.5Dr. The air gap formed between the inner surface of the stator pack with inner diameter Da and the outer surface of the rotor with a diameter Dr in the middle of the poles is minimal c1 = 0.5.(Da-Dr) and increases to the inner walls of the outer parts of the axial channels to a value of c2 ≤ 2,2.c1. On the inclined surfaces in the direction towards the interpole space the air gap is reduced to c1, in which the outer walls, closing the empty spaces above the permanent magnets. The walls to the adjacent poles of the parts with widths b2 of the axial channels close an angle less than or equal to 180°, open to the pole. The thickness d of the strips between the outer parts of the axial channels and the outer surface of the rotor does not exceed 0.0007 m. The winding is like hairpin made of wires with a rectangular cross-section.

An advantage of the brushless electric motor with permanent magnet excitation is the reduced value of the part of the magnetic flux of permanent magnets, which does not pass through the stator and does not create torque as well as the reduced value of the third harmonic component of the magnetic field above the poles of the rotor at a reduced value of the thickness d due to the increasing value of the air gap between the rotor and the stator in the direction from the middle of the poles to the outer ends of the axial channels with the inserted permanent magnets, as well as the reduced thickness of the parts of the permanent magnets that are located closer to the surface of the rotor, while the part of the magnetic flux of the permanent magnets creating torque is not reduced.

An advantage also is the reduced electrical resistance of the winding of the stator and the reduced electrical losses due to the larger filling of the slots in the stator pack by windings like hairpin performed of wires with a rectangular cross-section.

An advantage also is the increased value of the distance between the permanent magnets of the adjacent poles due to the reduced thickness of the parts of the permanent magnets that are located closer to the rotor surface as well as the reduced equivalent value of the air gap above the surface between adjacent poles.

An advantage is the increased power value of the brushless electric motor with permanent magnet excitation at a reduced mass of the permanent magnets due to the performance of the stator winding with inserted hairpin wires of rectangular cross-section and the reduced thickness of the parts of permanent magnets.

### BRIEF DESCRIPTION OF THE ATTACHED FIGURES

The brushless electric motor with permanent magnet excitation, according to the invention, is explained with the help of the attached figures, where:
Fig. 1 is a longitudinal half-section through the middle of a pole of the brushless electric motor.
Fig. 2 is a half cross-section through the poles of the rotor and of the stator of the brushless electric motor without inserted permanent magnets
Fig. 3 is a partial cross-section with inserted magnets in the axial channels of the adjacent poles with a changing air gap between the rotor and the stator.
Fig. 4 is a partial cross-section of the rotor with axial channels of adjacent poles with inserted magnets at equal air gap between the rotor and the stator.

### EXAMPLES OF THE PREFERRED EMBODIMENTS OF THE INVENTION

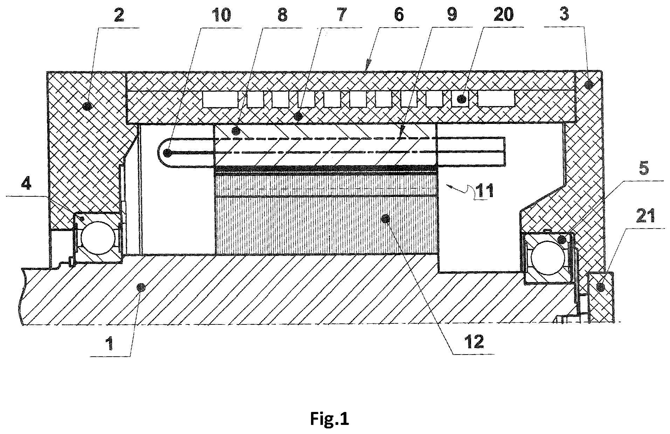

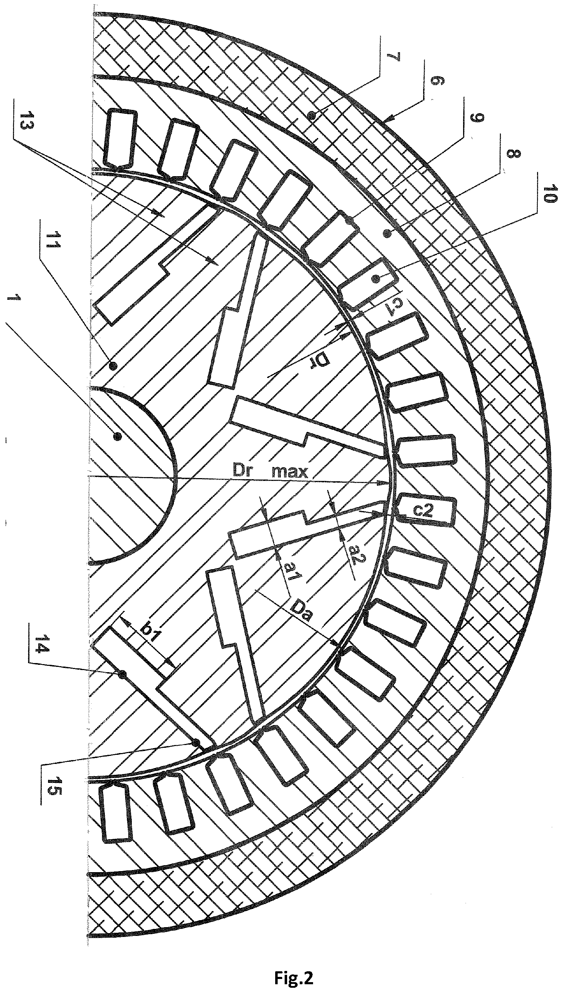

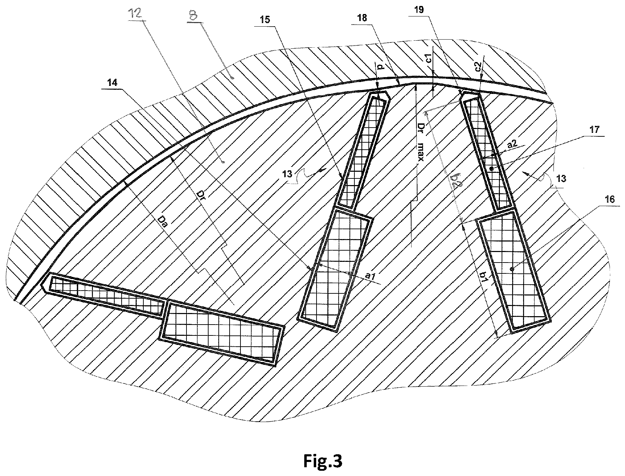

Fig. 1, Fig. 2, and Fig.3 show an exemplary embodiment of the invention comprising a shaft 1 supported in front end bell 2 and rear end bell 3 by means of front bearing 4 and rear bearing 5. The front end bell 2 and the rear end bell 3 cover the stator 6. The stator 6 contains a housing 7 covering stationary stator pack 8 with inner diameter Da. On the inside surface of the stator pack 8 are formed a multitude of uniformly distributed slots 9. In each slot 9, an insulated hairpin-like winding of wires with a rectangular cross-section is laid.

From the stator pack 8, rotor 11 is movably covered. The rotor 11 contains a rotor pack 12 fixed immovably on shaft 1. In the rotor package, 12 are formed poles, each of which contains a pair of mirror situated relative to the pole axial channels 13 located at an angle, open to the outer surface of the rotor 11.

Each axial channel 13 is composed of at two parts - inner part 14 with rectangular cross section with width b1 and height a1 and outer part 15 with rectangular cross section with width b2 and height a2. The walls of the inner parts 14 and of the outer parts 15 facing the interpole space are a continuation of each other. The outer parts 15 located closer to the outer surface of the rotor 11, has a smaller height a2 than the height a1 of the internal parts 14 of the axial channels 13. The height of the inserted permanent magnets 16 in the inner parts 14 of the axial channels 13 is greater than the height of the inserted permanent magnets 17 in the ones located closer to the surface of the rotor outer parts 15 of the axial channels 13. It is possible that the permanent magnets 16 inserted into the inner parts 14 of the axial channels 13 to be composed of two permanent magnets 17, whereby the number of types of permanent magnets is reduced to one. An inclined surface 18 is formed on both walls of each pole. In the region of the poles' middles, the air gap formed between the inner surface of the stator pack 8 with diameter Da and the outer surface of the rotor 11 with a diameter Dr is minimal c1 = 0.5.(Da - Dr) and increases to the inner towards the pole walls of the outer parts 15 of the axial channels 13 to values c2 ≤ 2,2c1. From the points of maximum value c2 on the inclined surfaces 18 to zone, which is located in the middle of the interpolar space, the size of the air gap decreases to a value c1. The thickness d of the strips between the outer parts 15 of the axial channels 13 and the outer surface of the rotor 11 is limited to 0.0007 m. The outer walls 19, closing the empty spaces above the permanent magnets 17, and the walls to the adjacent poles of the outer parts 15 with widths b2 of the outer parts 15 of the axial channels 13 form an angle less than or equal to 180°. In the housing 7 are formed ducts 20 for coolant passage. To the back wall of the brushless electric motor with permanent magnet excitation is installed sensor 21 to control the commutation of the phases.

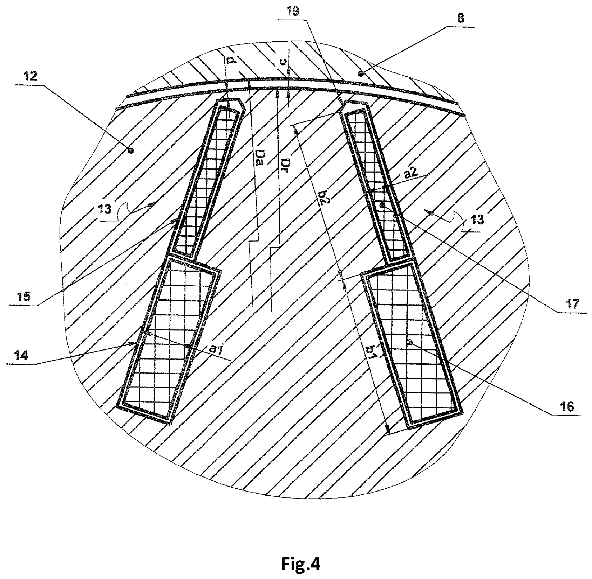

Fig. 4 show a second exemplary embodiment of the brushless electric motor with permanent magnet excitation which differs from the above-described exemplary embodiment of the invention in that the air gap, formed between the inner surface of the stator pack 8 with diameter Da and the outer surface of the rotor 11 with a diameter Dr, is constant.

### USE OF THE INVENTION

The brushless electric motor with permanent magnet excitation is designed for driving vehicles, for driving main machine tools with CNC at two-zone rotation speed control. The rotation of the electric motor and the creation of torque take place when an electric current is applied to the stator winding 10 and its interaction with the magnetic field created by the permanent magnets 16 and 17. An additional reactionary torque is created at a displacement of the axes of the magnetic field created by the current flowing across the phases by phase shifting of the commutation of the current in the stator 6 relative to the axes of the magnetic field created by the permanent magnets 16 and 17 in the second zone of rotation speed control. The additional reactionary torque is increased due to the increase of the area between the permanent magnets 16, 17 of the adjacent poles, as well as the reduction of the air gap above this area. The relative increase in the reactionary torque is more significant at lower current loadings of the stator winding 10. The additional electrical losses in the stator winding 10 and in the iron by the third harmonic component in the magnetic field in the air gap are reduced, due: to the variable value of the air gap in the zone above the permanent magnets 17; to the reduced height of the end parts of the permanent magnets 17 located closer to the surface of the rotor 11; and to the reduced thickness of the strips between the channels in which the permanent magnets 17 are inserted and the rotor surface 11. Compared to the known brushless electric motor, the brushless electric motor according to the invention, and at load conditions corresponding to S1 operation duty, consumes about 3000 W less compared to the known electric motor.

### EXPERIMENTAL DATA IN THE IMPLEMENTATION OF A VIRTUAL SPECIMEN REALIZING THE INVENTION

A comparison was made between the known electric motor with permanent magnet excitation and a virtual specimen, according to the invention. The dimensions of the stator packs both of the known electric motor and the virtual specimen are the same. The quantity of the magnets on the virtual sample is with a 25% reduction. The comparison is performed for magnets with the same parameters: Hc = 850 kA/m, Br = 1.15 T. The duration of operation at peak load 192 kW at the known sample is 15 sec, and in the virtual sample, it is increased to 20 min. Losses of electric power at a load of about 110 kW at the virtual specimen are reduced by about 3 kW. The power corresponding to loading in continuous duty S1 in the virtual specimen is increased by about 40% compared to the known specimen. The efficiency at a load of 110 kW at the specimen according to the invention is increased by 2.8% compared to the known specimen.

### CITED LITERATURE

1. JP 2014 171372 (TOYOTA IND CORP) 18 September 2014;
2. DE 101 44 585 A1 (OSTOVIC VLADO) 30 April 2003;
3. CN 107 394 027 A (GUANGDONG WELLING MOTOR MFG CO ET AL.)24 November 2017;
4. Performance Analysis of the Tesla Model 3 Electric Motor using Motor XP-PM

## Claims

1. A brushless electrical motor with permanent magnet excitation including a shaft which is supported in front and rear end bells through front and rear bearings and between the front and rear end bells is connected immovably a stator including a housing with formed ducts in it for passage of cooling liquid, by the housing is stationary covered a stator pack composed of a sheet electrical steel and on the inner surface of the stator pack are uniformly spaced slots in which at least one insulated winding is laid, wherein from the stator a rotor is movably covered containing a rotor pack, mounted immovably on the shaft, magnetic poles are formed in the rotor pack with alternating polarity, in each pole a pair of axial channels is formed with two parallel walls wherein the pair of axial channels are positioned relative to each other at an angle open to the outer surface of the rotor, the pairs of axial channels are separated from the outer surface of the rotor by means of thin strips and the inner ends of the pairs of axial channels are separated by means of other thin strips wherein in the axial channels permanent magnets with a rectangular cross-section are inserted, each axial channel (13) is composed of at least two parts - inner part (14) with rectangular cross section with width b1 and height a1 and outer part (15) with rectangular cross section with width b2 and height a2, the walls of the inner parts (14) and of the outer parts (15) facing the interpole space are a continuation of each other whereby the outer parts (15) located closer to the outer surface of the rotor (11), has a smaller height a2 than the height a1 of the internal parts (14) of the axial channels (13), whereby corresponding to the dimensions of the parts (14, 15) of the axial channels (13), the height of the inserted permanent magnets (17) in the outer parts (15) located closer to the surface of the rotor (11) is less than the height of the inserted permanent magnets (16) in the inner parts (14) of the axial channels (13), and bilaterally on each pole inclined surface (18) is formed where the surface of the poles in the area above the permanent magnets (17) has a reduced radius R1 < 0.5Dr and the air gap formed between the inner surface of the stator pack (8) with inner diameter Da and the outer surface of the rotor (11) with a diameter Dr in the middle of the poles is minimal c1 = 0.5(Da-Dr) and increases to the inner walls of the outer parts (15) of the axial channels (13) to a value of c2 ≤ 2,2.c1, and on the inclined surfaces (18) in the direction towards the interpole space the air gap is reduced to c1, in which the outer walls (19), closing the empty spaces above the permanent magnets (17), and the walls to the adjacent poles of the parts (15) with widths b2 of the axial channels (13) close an angle less than or equal to 180°, open to the pole and the thickness d of the strips between the outer parts (15) of the axial channels (13) and the outer surface of the rotor (11) does not exceed 0.0007 m, and the winding (10) is like hairpin made of wires with a rectangular cross-section.

## Patentansprüche

1. Ein bürstenloser Elektromotor mit Permanentmagneterregung, der eine Welle beinhaltet, die in vorderen und hinteren Lagerschilden durch vordere und hintere Lager gelagert ist, und zwischen den vorderen und hinteren Lagerschilden ist unbeweglich ein Stator verbunden, der ein Gehäuse beinhaltet mit darin ausgebildeten Kanälen für den Durchgang von Kühlflüssigkeit, durch das Gehäuse ist ein Statorpaket stationär abgedeckt, das aus einem Elektroblech zusammengesetzt ist, und auf der Innenfläche des Statorpakets sind gleichmäßig beabstandete Nuten, in denen mindestens eine isolierte Wicklung verlegt ist, wobei vom Stator ein Rotor beweglich abgedeckt ist, der ein Rotorpaket enthält, unbeweglich auf der Welle montiert, im Rotorpaket sind Magnetpole mit wechselnder Polarität ausgebildet, in jedem Pol ist ein Paar axialer Kanäle mit zwei parallelen Wänden ausgebildet, wobei das Paar axialer Kanäle relativ zueinander in einem zur Außenfläche des Rotors offenen Winkel positioniert ist, die Paare axialer Kanäle sind von der Außenfläche des Rotors mittels dünner Stege getrennt und die inneren Enden der Paare axialer Kanäle sind mittels anderer dünner Stege getrennt, wobei in die axialen Kanäle Permanentmagnete mit rechteckigem Querschnitt eingesetzt sind, jeder axiale Kanal (13) ist aus mindestens zwei Teilen zusammengesetzt - innerer Teil (14) mit rechteckigem Querschnitt mit Breite b1 und Höhe a1 und äußerer Teil (15) mit rechteckigem Querschnitt mit Breite b2 und Höhe a2, die Wände der inneren Teile (14) und der äußeren Teile (15), die dem Interpolraum zugewandt sind, sind eine Fortsetzung voneinander, wodurch die äußeren Teile (15), die näher an der Außenfläche des Rotors (11) angeordnet sind, eine geringere Höhe a2 als die Höhe a1 der inneren Teile (14) der axialen Kanäle (13) haben, wodurch entsprechend den Abmessungen der Teile (14, 15) der axialen Kanäle (13) die Höhe der eingesetzten Permanentmagnete (17) in den äußeren Teilen (15), die näher an der Oberfläche des Rotors (11) angeordnet sind, geringer ist als die Höhe der eingesetzten Permanentmagnete (16) in den inneren Teilen (14) der axialen Kanäle (13), und beidseitig an jedem Pol ist eine geneigte Fläche (18) ausgebildet, wobei die Oberfläche der Pole im Bereich über den Permanentmagneten (17) einen reduzierten Radius R1 < 0,5Dr hat und der Luftspalt, der zwischen der Innenfläche des Statorpakets (8) mit Innendurchmesser Da und der Außenfläche des Rotors (11) mit einem Durchmesser Dr in der Mitte der Pole gebildet ist, minimal c1 = 0,5(Da-Dr) ist und zu den inneren Wänden der äußeren Teile (15) der axialen Kanäle (13) auf einen Wert von c2 ≤ 2,2.c1 ansteigt, und an den geneigten Flächen (18) in Richtung zum Interpolraum der Luftspalt auf c1 reduziert ist, bei dem die äußeren Wände (19), die die leeren Räume über den Permanentmagneten (17) schließen, und die Wände zu den benachbarten Polen der Teile (15) mit Breiten b2 der axialen Kanäle (13) einen Winkel kleiner oder gleich 180° schließen, offen zum Pol, und die Dicke d der Stege zwischen den äußeren Teilen (15) der axialen Kanäle (13) und der Außenfläche des Rotors (11) 0,0007 m nicht überschreitet, und die Wicklung (10) ist wie eine Haarnadel aus Drähten mit rechteckigem Querschnitt gefertigt.

## Revendications

1. Moteur électrique sans balais à excitation par aimants permanents, comprenant un arbre supporté dans des flasques d'extrémité avant et arrière par l'intermédiaire de paliers avant et arrière, et entre les flasques d'extrémité avant et arrière, un stator est relié de manière fixe, comprenant un carter dans lequel sont formés des canaux destinés au passage d'un liquide de refroidissement, le carter recouvrant de manière fixe un paquet statorique composé de tôles d'acier magnétique, et sur la surface interne de ce paquet statorique sont formées des encoches espacées régulièrement dans lesquelles est disposé au moins un enroulement électrique isolé, **caractérisé en ce qu'**un rotor est monté de manière mobile à l'intérieur du stator, le paquet rotorique comprenant des pôles magnétiques à polarité alternée, chaque pôle comprenant une paire de canaux axiaux comprenant deux parois parallèles, **caractérisé en ce que** les canaux axiaux de chaque paire sont positionnés l'un par rapport à l'autre selon un angle ouvert vers la surface externe du rotor, chaque paire de canaux axiaux étant séparée de la surface extérieure du rotor par des bandes minces, et les extrémités intérieures des paires de canaux axiaux sont séparées au moyen d'autres bandes minces, **caractérisé en ce que** des aimants permanents de section rectangulaire étant insérés dans les canaux axiaux, chaque canal axial (13) comprenant au moins deux parties : une partie intérieure (14) de section rectangulaire, de largeur b1 et de hauteur a1, et une partie extérieure (15) de section rectangulaire, de largeur b2 et de hauteur a2 ; les parois des parties intérieures (14) et des parties extérieures (15) tournées vers l'espace interpole se prolongent mutuellement, les parties extérieures (15) situées plus près de la surface extérieure du rotor (11) présentent une hauteur a2 inférieure à la hauteur a1 des parties intérieures (14) des canaux axiaux (13), de sorte que, en fonction des dimensions des parties (14, 15) des canaux axiaux (13), la hauteur des aimants permanents (17) insérés dans les parties extérieures (15) situées plus près de la surface du rotor (11) est inférieure à la hauteur des aimants permanents (16) insérés dans les parties intérieures (14) des canaux axiaux (13), et, de part et d'autre de chaque pôle, une surface inclinée (18) est formée, sur laquelle la surface des pôles, dans la zone située au-dessus des aimants permanents (17), présente un rayon réduit R1 < 0,5Dr, et l'entrefer formé entre la surface intérieure du paquet de stator (8), de diamètre intérieur Da, et la surface extérieure du rotor (11), de diamètre Dr, est minimal au milieu des pôles avec c1 = 0,5 (Da-Dr), et augmente jusqu'à la valeur indiquée pour les parois intérieures des parties extérieures (15) des canaux axiaux (13) jusqu'à une valeur de c2 ≤ 2,2.c1, et sur les surfaces inclinées (18) vers l'espace interpole l'entrefer est réduit à c1, à l'intérieur duquel les parois extérieures (19), qui ferment les espaces vides au-dessus des aimants permanents (17), et les parois des parties (15) adjacentes aux pôles dont les largeurs b2 des canaux axiaux (13) ferment un angle inférieur ou égal à 180°, ouvert vers le pôle et l'épaisseur d des bandes utilisées entre les parties extérieures (15) des canaux axiaux (13) et la surface extérieure du rotor (11) est inférieure ou égale à 0,0007 m, et l'enroulement (10) de type épingle, constitué de fils de section transversale rectangulaire.
